(19) Europäisches Patentamt / European Patent Office / Office européen des brevets

(11) **EP 4 124 888 B1**

(12) # EUROPEAN PATENT SPECIFICATION

(45) Date of publication and mention of the grant of the patent:
**09.10.2024 Bulletin 2024/41**

(21) Application number: **21188957.1**

(22) Date of filing: **30.07.2021**

(51) International Patent Classification (IPC):
**G01S 17/89** (2020.01)  **G01S 17/00** (2020.01)

(52) Cooperative Patent Classification (CPC):
**G01S 17/006; G01S 17/89**

(54) **A METHOD FOR PROCESSING A LIDAR POINT CLOUD TO SIMULATE THE PRESENCE OF AN AEROSOL SUCH AS FOG**

VERFAHREN ZUR VERARBEITUNG EINER LIDARPUNKTWOLKE ZUR SIMULATION DER PRÄSENZ EINES AEROSOLS WIE ETWA NEBEL

PROCÉDÉ DE TRAITEMENT D'UN NUAGE DE POINTS LIDAR POUR SIMULER LA PRÉSENCE D'UN AÉROSOL COMME LE BROUILLARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2023 Bulletin 2023/05**

(73) Proprietors:
• **TOYOTA JIDOSHA KABUSHIKI KAISHA Toyota-shi, Aichi-ken 471-8571 (JP)**
• **ETH Zurich - The Swiss Federal Institute of Technology Zurich 8092 Zurich (CH)**

(72) Inventors:
• **ABBELOOS, Wim** 1140 BRUSSELS (BE)
• **HAHNER, Martin** 8092 ZURICH (CH)
• **SAKARIDIS, Christos** 8092 ZURICH (CH)
• **DAI, Dengxin** 8092 ZURICH (CH)
• **VAN GOOL, Luc** 8092 ZURICH (CH)

(74) Representative: **Cabinet Beau de Loménie 158, rue de l'Université 75340 Paris Cedex 07 (FR)**

(56) References cited:
• **SAKARIDIS CHRISTOS ET AL: "Semantic Foggy Scene Understanding with Synthetic Data", INTERNATIONAL JOURNAL OF COMPUTER VISION, KLUWER ACADEMIC PUBLISHERS, NORWELL, US, vol. 126, no. 9, 23 March 2018 (2018-03-23), pages 973 - 992, XP036568429, ISSN: 0920-5691, [retrieved on 20180323], DOI: 10.1007/S11263-018-1072-8**
• **GOODIN CHRISTOPHER ET AL: "Unmanned ground vehicle simulation with the Virtual Autonomous Navigation Environment", 2017 INTERNATIONAL CONFERENCE ON MILITARY TECHNOLOGIES (ICMT), IEEE, 31 May 2017 (2017-05-31), pages 160 - 165, XP033128462, DOI: 10.1109/MILTECHS.2017.7988748**
• **BERNUTH ALEXANDER VON ET AL: "Simulating Photo-realistic Snow and Fog on Existing Images for Enhanced CNN Training and Evaluation", 2019 IEEE INTELLIGENT TRANSPORTATION SYSTEMS CONFERENCE (ITSC), IEEE, 27 October 2019 (2019-10-27), pages 41 - 46, XP033668733, DOI: 10.1109/ITSC.2019.8917367**
• **ZHAO JIAN ET AL: "Method and Applications of Lidar Modeling for Virtual Testing of Intelligent Vehicles", IEEE TRANSACTIONS ON INTELLIGENT TRANSPORTATION SYSTEMS, IEEE, PISCATAWAY, NJ, USA, vol. 22, no. 5, 10 March 2020 (2020-03-10), pages 2990 - 3000, XP011851568, ISSN: 1524-9050, [retrieved on 20210430], DOI: 10.1109/TITS.2020.2978438**

**Description**

Field of the disclosure

The present disclosure is related to the field of LiDAR point clouds, and more precisely to the processing of these point clouds so as to simulate the acquisition of a LiDAR point cloud of this scene in the presence of an aerosol, for example an aerosol of liquid particles (or solid particles), typically fog (aerosol of water particles).

Description of Related Art

Light detection and ranging (LiDAR) is a method for determining the distance between a light emitter and an object.

In particular, LiDAR is crucial for the implementation of safe autonomous cars, because LiDAR measures the precise distance of objects from the sensor, which image (RGB) cameras cannot measure directly. Thus, LiDAR has found its way into many applications, including detection, tracking, localization, and mapping. Despite the benefit of measuring exact depth information, LiDAR has a significant drawback. The light pulses that LiDAR sensors emit in the invisible near infrared (NIR) spectrum (typically at 850 and 903 to 905 nm wavelength) do not penetrate water particles, or other types of aerosol particles, as opposed to automotive radars. This means that as soon as there are water particles in the form of fog in the air (or other types of aerosols), light pulses emitted by the sensor will undergo backscattering and attenuation.

Attenuation reduces the received signal power that corresponds to the range of the solid object in the line of sight which should be measured, while backscattering creates a spurious peak in the received signal power at an incorrect range. As a result, the acquired LiDAR point cloud will contain some spurious returns whenever there is fog present at the time of capture. This poses a big challenge for most outdoor applications, as they typically require robust performance under all weather conditions.

In recent years, several LiDAR datasets for 3D object detection have been presented. Although many of them contain diverse driving scenarios, none of them allows an evaluation on different kinds of adverse weather. Only recently, the Canadian Adverse Driving Conditions Dataset (CADCD) (Matthew Pitropov, Danson Garcia, Jason Rebello, Michael Smart, Carlos Wang, Krzysztof Czarnecki, and Steven Waslander. Canadian adverse driving conditions dataset, 2020) and the Seeing Through Fog (STF) Dataset (Mario Bijelic, Tobias Gruber, Fahim Mannan, Florian Kraus, Werner Ritter, Klaus Dietmayer, and Felix Heide. Seeing through fog without seeing fog: Deep multimodal sensor fusion in unseen adverse weather. In The IEEE Conference on Computer Vision and Pattern Recognition (CVPR), June 2020.) address the need for such an evaluation. While CADCD focuses on snowfall, STF is targeted towards evaluation under fog, rain and snow. Consequently, there is still not a large quantity of LiDAR foggy data available that could be used to train deep neural networks.

In fact, collecting and annotating large-scale datasets per se is time, labor and cost intensive, let alone when done for adverse weather conditions.

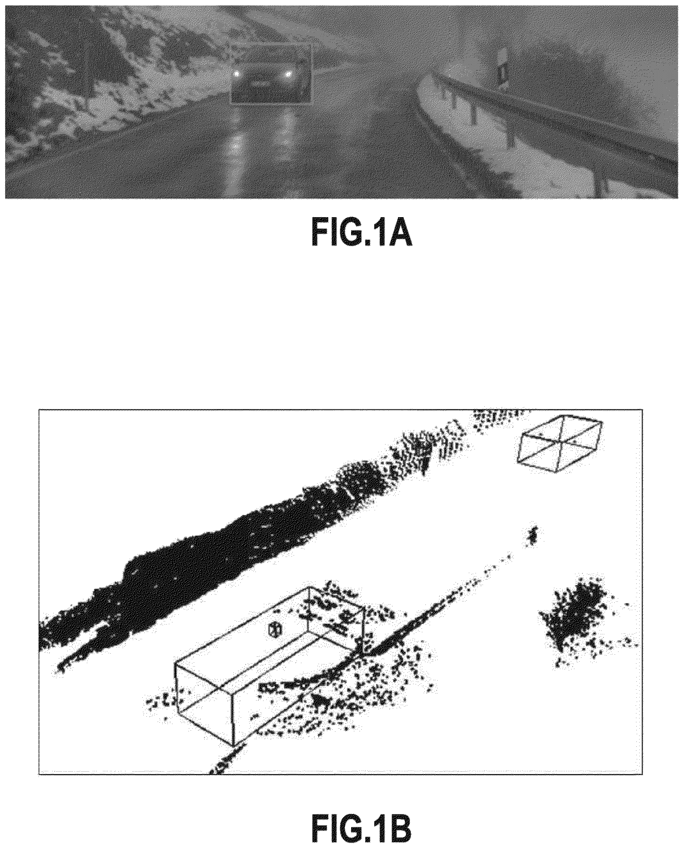

Figure 1A is a photography of a scene on which a vehicle, a barrier, and a bank are visible, although fog is present.

Figure 1B is a representation of a LiDAR point cloud for the scene of figure 1A. It can be observed that the bank forms a dense cloud on the left side of the vehicle, because as a solid object, it reflects LiDAR pulses efficiently. On the right side of the vehicle (and above the barrier which is outside the LiDAR system's field of view directly next to the vehicle), the absence of any solid object leads to LiDAR responses from the fog floating around the vehicle (the small cloud around the vehicle). This results from the fact that the fog caused LiDAR responses and acts as an object which will provide the strongest response in the absence of a solid object.

While difficult to represent here, an attenuation of intensity can also be observed.

The known techniques are still not satisfactory.

Examples in the art are:

SAKARIDIS CHRISTOS ET AL: "Semantic Foggy Scene Understanding with Synthetic Data",INTERNATIONAL JOURNAL OF COMPUTER VISION, KLUWER ACADEMIC PUBLISHERS, NORWELL, US, vol. 126, no. 9, 23 March 2018 (2018-03-23), pages 973-992, describes to add foggy data to clear weather environment data which are used in supervised learning for automatic scene analysis, e.g. for autonomous driving. The used data are depth map data, which data set is known as "Citispace", being one of known real environment data taken for testing, simulation and development.The fog simulation uses an attenuation coefficient, which is derived from the Cityspace depth data. Different additional filtering is performed.

GOODIN CHRISTOPHER ET AL: "Unmanned ground vehicle simulation with the Virtual Autonomous Navigation Environment",2017 INTERNATIONAL CONFERENCE ON MILITARY TECHNOLOGIES (ICMT), IEEE, 31 May 2017 (2017-05-31), pages 160-165, describes the simulation of autonomous ground vehicles with different sensors (e.g. LIDAR and camera) by using the software package VANE (Virtual Autonomous Navigation Environment). The environment and the vehicles are highly detailed simulated as triangular meshes. Additionally, atmospheric properties are simulated.

BERNUTH ALEXANDER VON ET AL: "Simulating Photo-realistic Snow and Fog on Existing Images for Enhanced CNN Training and Evaluation",2019 IEEE INTELLIGENT TRANSPORTATION SYSTEMS CONFERENCE (ITSC), IEEE, 27 October 2019 (2019-10-27), pages 41-46, describes to simulate fog for images used for autonomous vehicle machine learning. 3D scenes are used as basis. Fog is simulated by using an extinction factor derived from meteorological visibility and Mie scattering. These values are associated with the image pixels (or point cloud data).

ZHAO JIAN ET AL: "Method and Applications of Lidar Modeling for Virtual Testing of Intelligent Vehicles",IEEE TRANSACTIONS ON INTELLIGENT TRANSPORTATION SYSTEMS, IEEE, PISCATAWAY, NJ, USA, vol. 22, no. 5, 10 March 2020 (2020-03-10), pages 2990-3000, describes virtual testing of lidar systems in autonomous vehicles. The simulation model of the lidar measurement for different weather conditions uses an atmospheric transmission coefficient, based on empirical formulae (because using Mie scattering is too computing intensive). Additionally the range effect of droplets (of rain, comparable to fog) is considered as "unwanted data"; it is calculated according to Monte Carlo method, giving a probability of non-correct range determination, being dependent on the droplet size and distribution.

## Summary

The present disclosure overcomes one or more deficiencies of the prior art by proposing a method for processing a LiDAR point cloud of a scene acquired in the absence of aerosol or with a light level of aerosol, so as to simulate the acquisition of a LiDAR point cloud of this scene in the presence of an aerosol, comprising, for every point of the LiDAR point cloud, the following steps:

    a. determining the initial range of this point,
    b. determining an initial intensity value associated with this point,
    c. determining the product of the LiDAR system's optical constant and of the LiDAR pulse peak power sent by the LiDAR emitter,
    d. determining a first intensity value (this first intensity value can be called the attenuated intensity value) for this point by multiplying the intensity value determined in step b, by a factor depending on an attenuation coefficient (set at the desired aerosol density level for each simulation) and on the initial range determined in step a (i.e. an intensity is calculated for the object already present in the scene which produced a point: a hard object),
    e. determining a set of values each associated with a range comprised between 0 and the initial range determined in step a (the ranges can increase from 0 to the range of step a with a given step, for example 10 cm), by calculating an integral over time of predetermined relationship between the range (the one comprised between 0 and the initial range), the initial range determined in step a, the attenuation coefficient, and the half-power pulse width of the LiDAR emitter (used to acquire the LiDAR point cloud - the emitter is comprised within a LiDAR system including an emitter and a receiver),
    f. identifying the greatest value of the set of values, and the associated range,
    g. multiplying the value identified in step f by the product determined in step c and a backscattering coefficient (for example a constant set by an operator), to obtain a second intensity value corresponding to the backscattering produced by the aerosol (the second intensity value can be called a backscatter intensity value),
    h. if the second intensity value identified in step g is greater than the first intensity value determined in step d,

    - determining a random value of float type comprised within -1 and 1 to calculate a noise factor,
    - determining a scaling factor using the range identified in step f,
    - replacing the position of the point with a position determined using the noise factor and the scaling factor, (the random value ensures that the position is arranged randomly around the point corresponding to this range - a new point cloud is obtained and instead of the initial point, there is now a point with a position comprised substantially between the original point and the receiver),
    - replacing the intensity of the point with the second intensity value obtained in step g (the new point has an intensity depending on the integration of predetermined relationship), else, replacing the intensity of the point with the first intensity value determined in step d (if the attenuated intensity is greater than the backscattered one, the location of the point is kept but the intensity is attenuated).

The point cloud used as input can preferably be acquired under clear weather, which the person skilled in the art will identify as the absence of aerosol. Alternatively, a light level of aerosol or fog can be present. The person skilled in the art will be able to identify the presence of points owing to backscattering in the point cloud used as input, which may indicate that a point cloud cannot be used as input.

It has been observed that a good simulation of the presence of aerosol can be obtained by determining two different intensity values, as it reflects the effect of an aerosol such as fog: the signal can be attenuated but originate from the initial object, or the aerosol itself will produce a peak through backscattering. In other words, the present method is based on the physical effect that fog has on LiDAR.

If the backscattered peak is greater than the attenuated peak, the backscattered peak should be kept and its location can be used to determine the location of the new point which replaces the initial point in the LIDAR point cloud. This operation has been observed to be in accordance with how LiDAR system produces points (each point is associated with a peak in the received signal).

The person skilled in the art can implement the first intensity value using the attenuation coefficient and the initial range. For example, this can be done using a function, or a set of pre-calculated values (for example obtained using LiDAR point clouds acquired under fog).

Also, the person skilled in the art will know how to define the attenuation coefficient. By way of example, document "Semantic foggy scene understanding with synthetic data" (Christos Sakaridis, Dengxin Dai, and Luc Van Gool. International Journal of Computer Vision, 126(9):973-992, Sep 2018) uses an analogous attenuation coefficient in the context of fog.

The product of the LiDAR system optical constant and of the LiDAR pulse peak power sent by the LiDAR emitter can be obtained using values provided by the manufacturer of the LiDAR system, or they can be deduced from a measurement by the LiDAR system. Also, the LiDAR system optical constant is known to the person skilled in the art as not depending on range or time but on the aperture area of the sensor and given by $C_A = c\eta A_R/2$, wherein $c$ is the speed of light, $\eta$ characterizes the losses in the receiver's optics and $A_R$ is the aperture area of the sensor's optical receiver.

According to a particular embodiment, the values obtained by integrating the predetermined relationship are stored in a lookup table (having multiple entries in particular for the range, the initial range, and the parameters of the predetermined relationship).

The values stored in this lookup table can be calculated in a preliminary step. This embodiment diminishes the computing burden.

According to a particular embodiment, the integral of step e is the one of the following relationship

$$P_{R,fog}^{soft}(R) = C_A P_0 \beta \int_0^{2\tau_H} sin^2\left(\frac{\pi}{2\tau_H}t\right) \times \frac{\exp\left(-2\alpha\left(R - \frac{ct}{2}\right)\right)}{\left(R - \frac{ct}{2}\right)}$$

$$\times \xi\left(R - \frac{ct}{2}\right) U\left(R_0 - R + \frac{ct}{2}\right) dt$$

wherein $P_{R,fog}^{soft}(R)$ is the received signal power as a function of range R for the contribution of the aerosol,

    $C_A$ is the optical constant of the LiDAR system,
    $P_0$ is the LiDAR pulse peak power sent by the LiDAR emitter,
    $\beta$ is the backscattering coefficient,
    $\tau_H$ is the half-power pulse width of the LiDAR emitter,
    $t$ is the time,
    $\alpha$ is the attenuation coefficient,
    $c$ is the speed of light,
    $\xi()$ is the crossover function defining the ratio of the area illuminated by the LIDAR emitter and the part of it observed by the receiver,
    $U()$ is the Heaviside function, and
    $R_0$ is the initial range determined in step a.

The above equation has been observed to be a good representation of the received power (from which the intensity can be deduced as they are linearly linked) resulting from backscattering at different ranges.

This equation has been obtained using the linear system model of document "Influences of weather phenomena on automotive laser radar systems" (R. Rasshofer, M. Spies, and H. Spies. Advances in Radio Science, 9, 07 2011) which describes the received signal power at a LiDAR receiver, which is valid for non-elastic scattering. This equation notably takes into account the spatial impulse response of the LiDAR optical system in foggy conditions.

It should be noted that the integral in this equation (the one of step e) can be used to obtain values stored in said lookup table, or it can be used to perform on the fly computations.

The above equation also includes the multiplication by $C_A P_0 \beta$ which is performed in step g, but preferably only for the greatest value (alternatively for all values).

According to a particular embodiment, the integral of step e is calculated using an approximate method.

According to a particular embodiment, Simpson's rule is used as approximate method.

This method has been observed to be a suitable numerical integration method for the invention.

According to a particular embodiment, step d comprises calculating the first intensity value using the following equation:

$$i_{hard} = i \times \exp(-2\alpha R_0)$$

wherein $i_{hard}$ is the first intensity value,
$i$ is the initial intensity value,
$\alpha$ is the attenuation coefficient, and
$R_0$ is the initial range determined in step a.

This equation has been observed to be a good representation of the received power for an object (here a solid/hard object) when an aerosol is present.

According to a particular embodiment, the method comprises processing a plurality of LiDAR point clouds each associated with labels (typically the position in space of objects and their types), to obtain a processed machine learning training dataset comprising the processed LiDAR point clouds and the corresponding labels.

The invention further provides a method of training a machine learning detection model using the training dataset obtained previously to detect the labels.

The simulation of aerosol improves the training of a machine learning detection model configured to receive LiDAR point clouds as input.

The invention also provides a system comprising a LiDAR system and, stored on a recording medium readable by a computer, the neural network trained in accordance with the method as defined above.

The invention also provides a vehicle comprising a system as defined above.

In one particular embodiment, the steps of the method are determined by computer program instructions.

Consequently, the invention is also directed to a computer program for executing the steps of a method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Brief description of the drawings

Further features and advantages of the present disclosure will become apparent from the following description of certain embodiments thereof, given by way of illustration only, not limitation, with reference to the accompanying drawings in which:

Figure 1A and 1B, already described, represent a scene in which fog is present.
Figure 2 is a schematic representation of a LIDAR optical system.
Figure 3A and 3B are two graphs illustrating the received power as computed according to an example.
Figure 4 is a schematic representation of the steps of a method for processing LIDAR point clouds according to an example.
Figure 5 is a schematic representation of a vehicle according to an example.

Description of embodiments

We will now describe a method for processing a LiDAR point cloud of a scene so as to simulate the acquisition of a LiDAR point cloud of this scene in the presence of an aerosol.

In the present description, homogeneous fog is used as the exemplary aerosol. The present invention is however not limited to fog and can be adapted to other homogeneous aerosols (for example fumes, etc.).

From document "Influences of weather phenomena on automotive laser radar systems", a linear system model is known to describe the received signal power at a LiDAR's receiver, under the assumption that the scattering is non-elastic. In particular, the received signal power $P_R$ as a function of range $R$ (the distance between an object and the receiver) is modeled as the time-wise convolution of the transmitted signal power $P_T$ with the spatial impulse response $H$ of the optical system:

$$P_R(R) = C_A \int_0^{2R/c} P_T(t) H\left(R - \frac{ct}{2}\right) dt \qquad \text{Eq. 1}$$

Wherein c is the speed of light, $C_A$ is the optical constant of the LiDAR system, $R$ is the range, and t is the time.

More precisely, $C_A$ is a constant not depending on range or time but on the aperture area of the sensor and given by $C_A = c\eta A_R/2$, wherein $c$ is the speed of light, $\eta$ characterizes the losses in the receiver's optics and $A_R$ is the aperture area of the sensor's optical receiver.

It should be noted that while the above equation provides an expression of the received power, the associated intensity can be deduced from this power as they are linearly linked.

Now, we will describe and model the remaining terms. From the above document, it is known that the time signature of the transmitted pulse can be modeled by a squared sine function:

$$P_T(t) = \begin{cases} P_0 \sin^2\left(\frac{\pi}{2\tau_H} t\right), & 0 \leq t \leq 2\tau_H \\ 0 \; otherwise \end{cases} \qquad \text{Eq. 2}$$

Wherein $P_0$ is the emitted pulse's peak power and $\tau_H$ is the half-power pulse width, and t is the time.

From the above mentioned document "Influences of weather phenomena on automotive laser radar systems", $\tau_H$ is usually known to be comprised between 10 and 20 nanoseconds. In equation 2, the time origin is not set at the peak of the pulse, which typically corresponds to the acquired range measurement, but at the start of the pulse, so that all signals are set at zero for negative time values. In the following, this convention is kept and the required correction to the range is performed when necessary. For example, when subsequently a set of ranges has to be considered, the correction can include going from $0 - \frac{\tau_H c}{2}$ to $R_0 - \frac{\tau_H c}{2}$ instead of from 0 to $R_0$.

The spatial impulse response function $H$ of the optical system can be modeled as the product of the individual impulse responses of the optical channel, $H_C$, and of the target (i.e. the actual object) $H_T$:

$$H(R) = H_C(R) H_T(R) \qquad \text{Eq. 3}$$

And the impulse response of the optical channel $H_C$ is:

$$H_C(R) = \frac{T^2(R)}{R^2} \xi(R) \qquad \text{Eq. 4}$$

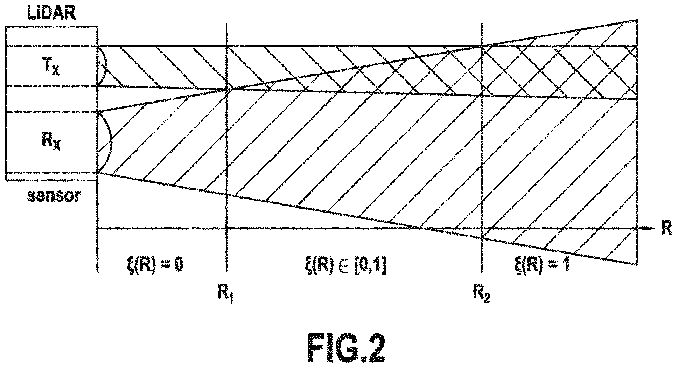

Wherein $T(R)$ is the total one-way transmission loss and $\xi(R)$ is the crossover function defining the ratio of the area illuminated by the transmitter and the part of it observed by the receiver, as represented on Figure 2, where a bistatic beam configuration is used. By way of example, $\xi(R)$ can be expressed using the following piece-wise linear approximation:

$$\xi(R) = \begin{cases} 0, R \leq R_1 \\ \dfrac{R}{R_2 - R_1} - \dfrac{R_1}{R_2 - R_1}, R_1 < R < R_2 \\ 1, R_2 \leq R \end{cases} \qquad \text{Eq. 5}$$

Wherein $R_1$, visible on figure 2, indicates the range at which the two beams start to overlap, and $R_2$, visible on figure 2, indicates the range at which the two beams fully overlap. More precisely, figure 2 is a schematic representation of a LiDAR sensor system equipped with a transmitter Tx and a receiver Rx which do not have coaxial optics but parallel axes. This configuration is called a bistatic beam configuration.

Further, the total one-way transmission loss $T(R)$ is defined as:

$$T(R) = \exp\left(-\int_{r=0}^{R} \alpha(r)dr\right) \qquad \text{Eq. 6}$$

Wherein $\alpha(r)$ is a spatially varying attenuation coefficient, corresponding to a fog density level. As the fog is considered to be homogeneous, $\alpha(r) = \alpha$, with $\alpha$ being a selected/given fog density level.

Consequently:

$$T(R) = \exp(-\alpha R) \qquad \text{Eq. 7}$$

It should be noted that the attenuation coefficient $\alpha$ increases as visibility range decreases. Therefore, for a same three-dimensional scene, the impulse response of the optical channel $H_C$ varies with visibility.

Also, the last term in equation 1 that remains to be modeled is the impulse response of the target $H_T$. However, different cases should be considered for $H_T$ according to the weather conditions, as the composition of the target for the same three-dimensional scene is different under fog than in clear weather. The present method proposes to construct a relation between the response $P_R$ in clear weather and in fog for the same three-dimensional scene and this relation enables the simulation of fog (or other aerosols) on clear-weather LiDAR point clouds.

Further, the previously described optical model is particularized for clear weather cases and fog in terms of impulse response terms $H_C$ and $H_T$.

Under clear weather, the attenuation coefficient $\alpha$ is zero, which leads to:

$$H_C(R) = \frac{\xi(R)}{R^2} \qquad \text{Eq. 8}$$

Moreover, the target in clear weather is comprised only of the solid object on which the LiDAR pulse is reflected. This type of target is called a hard target.

The impulse response $H_T$ of a hard target at range $R_0$ is a Dirac delta function expressed as:

$$H_T(R) = H_T^{hard}(R) = \beta_0 \delta(R - R_0) \qquad \text{Eq. 9}$$

Wherein $\beta_0$ denotes the differential reflectivity of the target. If only diffuse reflections (Lambertian surfaces) are considered, $\beta_0$ is expressed as:

$$\beta_0 = \frac{\Gamma}{\pi}, 0 < \Gamma \leq 1 \qquad \text{Eq. 10}$$

Wherein $\Gamma$ is the reflectivity comprised between 0 and 1.

Consequently, in clear weather the total impulse response function $H(R)$ can be expressed as:

$$H(R) = \frac{\xi(R_0)}{R_0^2}\beta_0\delta(R - R_0) \qquad \text{Eq. 11}$$

Wherein the property $f(x)\delta(x - x_0) = f(x_0)\delta(x - x_0)$ has been applied. Because in practice $R_2$ is less than two meters, it is assumed that $R_2 \ll R_0$, which leads to $\xi(R_0) = 1$. Thus, starting from equation 1 and given the range measurement $R_0$ obtained from an initial clear weather LiDAR point cloud, the received signal power can be computed in closed form as:

$$P_{R,clear}(R) = C_A \int_0^{2R/c} P_0 \sin^2\left(\frac{\pi}{2\tau_H}t\right)\frac{1}{R_0^2}\beta_0\delta\left(R - \frac{ct}{2} - R_0\right) dt$$

$$= \begin{cases} \frac{C_A P_0 \beta_0}{R_0^2} \sin^2\left(\frac{\pi(R - R_0)}{c\tau_H}\right), R_0 \leq R \leq R_0 + c\tau_H \\ 0 \; otherwise \end{cases} \qquad \text{Eq. 12}$$

The received signal power attains its maximum value at $R_0 + \frac{c\tau_H}{2}$. As mentioned above, to conform with the original range measurement of $R_0$, the response $P_{R,clear}(R)$ is shifted by $- \frac{c\tau_H}{2}$.

The next step is to establish the transformation of $P_{R,clear}(R)$ to $P_{R,fog}(R)$, the received power under fog. While the same hard target still exists since the three-dimensional scene is the same, there is now an additional contribution from the fog itself, which constitutes a soft target, as explained in document "Influences of weather phenomena on automotive laser radar systems", that provides distributed scattering to the impulse response $H_T$.

The impulse response of this soft fog target is expressed as:

$$H_T^{soft}(R) = \beta U(R_0 - R) \qquad \text{Eq. 13}$$

Wherein $\beta$ denotes the backscattering coefficient, which is constant under the assumption that the fog is homogeneous, and $U$ is the Heaviside function. In equation 13, the function, $H_T^{soft}(R) = \beta(R)$ of document "Influences of weather phenomena on automotive laser radar systems" is discretized.

The co-existence of a soft target and a hard target can be modeled by considering the superposition of the respective impulse responses:

$$H_T(R) = H_T^{soft}(R) + H_T^{hard}(R) = \beta U(R_0 - R) + \beta_0\delta(R - R_0) \qquad \text{Eq. 14}$$

Consequently, in fog, the total impulse response function $H(R)$ can be expressed as:

$$H(R) = \frac{\exp(-2\alpha R)\xi(R)}{R^2} \times \left(\beta U(R_0 - R) + \beta_0\delta(R - R_0)\right) \qquad \text{Eq. 15}$$

It has been observed that compared to clear weather, the spatial impulse response in fog is more complex to compute, but it can still be decomposed into two terms, corresponding to the hard and soft target respectively, leading to a respective decomposition of the received response as:

$$P_{R,fog}(R) = P_{R,fog}^{hard}(R) + P_{R,fog}^{soft}(R) \qquad \text{Eq. 16}$$

Focusing on the hard target term, and using equation 1 to calculate the corresponding term of the received response $P_{R,fog}^{hard}(R)$ , and leveraging again the assumption that $R_2 \ll R_0$, the following equations are obtained:

$$P_{R,fog}^{hard}(R)$$

$$= C_A \frac{\exp(-2\alpha R_0)}{R_0{}^2} \int_0^{2\tau_H} P_0 \sin^2\left(\frac{\pi}{2\tau_H} t\right) \beta_0 \delta(R - \frac{ct}{2} - R_0) dt$$

$$= \begin{cases} \dfrac{C_A P_0 \beta_0 \exp(-2\alpha R_0)}{R_0{}^2} \sin^2\left(\dfrac{\pi(R - R_0)}{c\tau_H}\right), R_0 \leq R \leq R_0 + c\tau_H \\ 0 \; otherwise \end{cases}$$

Eq. 17

$$= \exp(-2\alpha R_0) P_{R,clear}(R)$$

Thus, the hard target term of the response in fog is an attenuated version of the clear-weather response $P_{R,clear}$. On the other hand, the soft target term is expressed as:

$$P_{R,fog}^{soft}(R) = C_A P_0 \beta \int_0^{2\tau_H} \sin\left(\frac{\pi}{2\tau_H} t\right)$$

$$\times \frac{\exp\left(-2\alpha\left(R - \frac{ct}{2}\right)\right)}{\left(R - \frac{ct}{2}\right)^2} \xi\left(R - \frac{ct}{2}\right) U\left(R_0 - R + \frac{ct}{2}\right) dt$$

Eq. 18

Equation 18 does not possess a closed-form expression, as the integral $I(R, R_0, \alpha, \tau_H)$ on the right-hand side of equation 18 cannot be calculated analytically.

However, for a given $\tau_H$ and a given $\alpha$ (which can be set according to a desired density level of fog by an operator), $I(R, R_0, \alpha, \tau_H)$ can be computed numerically for fixed values of $R$. By way of example, Simpson's 1/3 rule for numerical integration can be used to provide an approximation of the profile of $P_{R,fog}^{soft}(R)$ with a chosen level of precision.

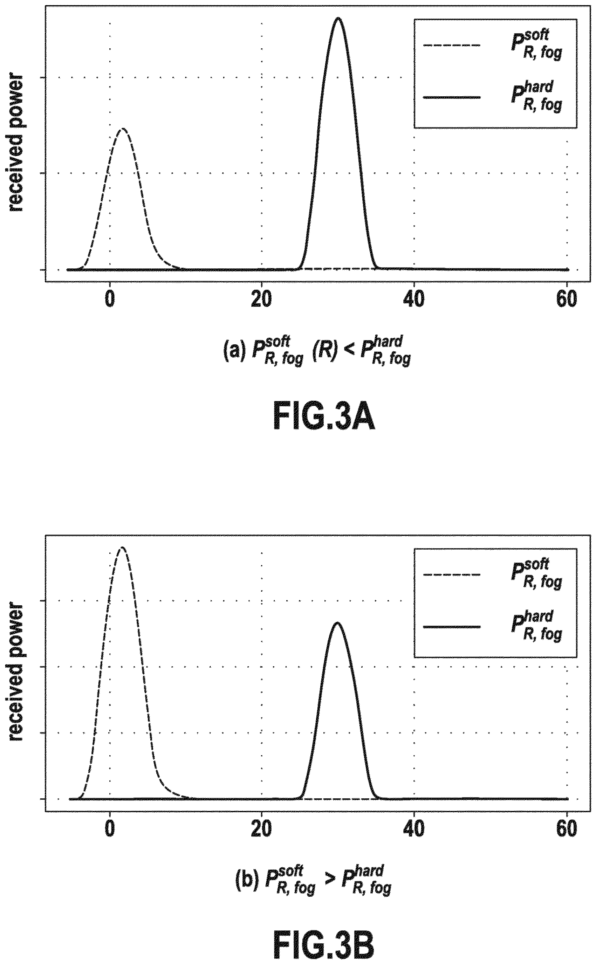

Figure 3A and 3B are illustrations of both $P_{R,fog}^{soft}(R)$ and $P_{R,fog}^{hard}(R)$. These two terms of received signal power correspond to a single LIDAR pulse, associated with a solid object that reflects the pulse $P_{R,fog}^{hard}$ and the soft target $P_{R,fog}^{soft}$, plotted across the range domain. On figure 3A, the fog is not thick enough to yield a return due to backscatter, while on figure 3B, the fog is thick enough to yield a return due to backscatter that overshadows the solid object at $R_0 = 30m$. As the LIDAR receiver usually places a point into the point cloud associated with the greatest peak in the received signal, it follows that for figure 3A, the range is unchanged and the power should be calculated in accordance with equation 17, while for figure 3B, the range and the position of the point in space should both be changed in accordance with equation 18.

In fact, depending on the distance of the hard target from the sensor, the soft target term of the response may exhibit a larger maximum value than the hard target term, which implies that the measured range changes due to the presence of fog and becomes equal to the point of maximum of the soft target term.

It should be noted that the parameters of equations 1 to 18 can be defined in accordance with a given LiDAR system. By way of example, a LiDAR system commercialized by the American company Velodyne Lidar under the reference HDL-64E can be considered. This leads to a half-pulse width $\tau_H$ of 20 nanoseconds. Also, $\beta$ can be set to $\frac{0.046}{MOR}$ (as in document "Influences of weather phenomena on automotive laser radar systems" - MOR being the Mete-

orological Optical Range). Empirically, $\beta_0$ has been set to $\dfrac{1\times10^{-6}}{\pi}$ for all points to get a similar intensity distribution as in real foggy point clouds obtained by an HDL-64E LiDAR sensor.

From equations 1 to 18, it is possible to conceive a method, implemented on a computer, which will take a LiDAR point cloud of a scene as input, and simulate the acquisition of a LiDAR point cloud of the same scene in the presence of an aerosol such as fog, for every point of the LiDAR point cloud.

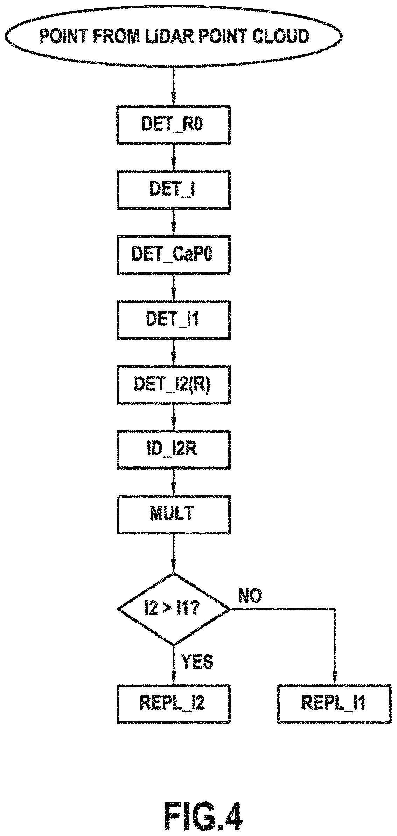

On figure 4, an exemplary method is represented. This method comprises, for every point of the LiDAR point cloud (under clear weather), an initial step DET_R0 wherein the initial range $R_0$ of this point is determined. Typically, the point has three coordinates to define its position in space. From these coordinates, it is possible to determine the initial range.

In a second step DET_I, the initial intensity value i associated with the point is determined. This intensity is provided along with the LIDAR point cloud.

Then, the product of the LiDAR system optical constant and of the LiDAR pulse peak power sent by the LiDAR emitter are determined in step DET_CaP0. This corresponds to obtaining the product $C_A P_0$, which can be provided by the manufacturer of the LiDAR system, or deduced from equation 12. In fact, using the intensity i and the range $R_0$ of the point and a selected value of $\beta_0$, it is possible to deduce this product.

From this initial intensity value $i$, a first intensity value, for example denoted $i_{hard}$ for this point is determined in step DET_I1. This is performed using equation 17 (adapted for intensities), and comprises multiplying the intensity value determined in step DET_I, by a factor depending on the attenuation coefficient $\alpha$ and on the initial range $R_0$ determined in step DET_R0.

In a subsequent step DET_I2(R) (which could also be performed before DET_I1), a set of values each associated with a range comprised between 0 and the range determined in step a, by calculating an integral over time of a predetermined relationship between the range $R$, the initial range $R_0$ determined in step a, the attenuation coefficient $\alpha$, and the half-power pulse width $\tau_H$ of the LiDAR emitter. In other words, this step comprises determining $I(R, R_0, \alpha, \tau_H)$, for example for ranges spaced apart by 10cm, and also for example by using Simpson's rule.

Alternatively, step DET_I2(R) comprises using a lookup table in which the values have been predetermined.

Then, in step ID_I2R, the greatest value $i_{tmp}$ of the set of values is identified, as well as the associated range $R_{tmp}$.

A multiplication is then carried out (step MULT) wherein the value $i_{tmp}$ identified in step ID_I2R is multiplied by the product determined in step DET_CaP0 and the backscattering coefficient $\beta$, to obtain a second intensity value $i_{soft}$ corresponding to the backscattering produced by the aerosol.

A comparison is then performed in step I2>I1. If the second intensity value $i_{soft}$ is greater than the first intensity value $i_{hard}$, then the soft target has produced a greater LiDAR response than the hard target (similar to figure 3B).

Step REPL_I2 is then carried out in which:

- A random value is determined (to avoid having a precise sphere of points associated with the fog/the soft target),
- The position of the point (the initial point of the LIDAR point cloud) is replaced with a position determined using the range $R_{tmp}$ identified in step ID_I2R, and the random value.
- The intensity of the point (the initial point of the LIDAR point cloud) is replaced with the second intensity $i_{soft}$ obtained in step MULT.

By way of example obtaining a random value can comprise obtaining a random value $p$ comprised within -1 and 1 (of type float). A noise factor $n = 2^p$ can then be calculated which will be used with a scaling factor $s = \dfrac{R_{tmp}}{R_0}$ (with $R_{tmp}$ being the range identified in step ID_I2R). The coordinates x, y, z of the point can be replaced as follows:

$$x \leftarrow s \times n \times x$$

$$y \leftarrow s \times n \times y$$

$$z \leftarrow s \times n \times z$$

The point is then replaced in the LIDAR point cloud.

If the first intensity $i_{hard}$ is superior or equal to the second intensity $i_{soft}$, the position of the point is unchanged but the first intensity value $i_{hard}$ is used as the new intensity value of the point.

By way of example, it is possible to process the point clouds from a dataset of LiDAR point clouds acquired under clear weather, for which labels are known, to obtain a training dataset.

From this training dataset, a machine learning detection model such as the PV-RCNN (Shaoshuai Shi, Chaoxu Guo, Li Jiang, Zhe Wang, Jianping Shi, Xiaogang Wang, and Hongsheng Li. Pv-rcnn: Point-voxel feature set abstraction for 3d object detection. In Proceedings of the IEEE/CVF Conference on Computer Vision and Pattern Recognition, pages 10529-10538, 2020) can be trained to obtain a trained machine learning detection model to detect objects.

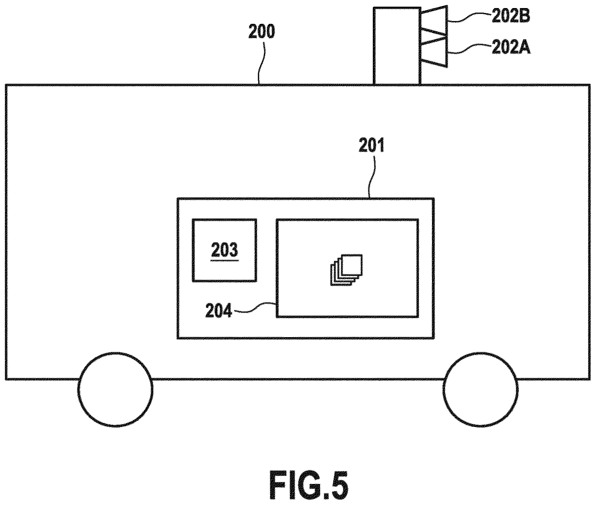

This model can be stored in a non-volatile memory, as represented on figure 5.

Figure 5 is a schematic representation of a vehicle 200, here a car, equipped with a system 201 for performing an object detection using LIDAR point clouds acquired by a LiDAR system (emitter 202A and receiver 202B). System 201 comprises a processor 203 and a non-volatile memory 204 in which the trained model has been stored.

It should be noted that the detection of various objects (cars, cyclists, pedestrians) has been improved when training a detection model with the processed point clouds of the present method, in particular, the detection is improved over the fog simulation of document "Seeing through fog without seeing fog: Deep multimodal sensor fusion in unseen adverse weather" (Mario Bijelic, Tobias Gruber, Fahim Mannan, Florian Kraus, Werner Ritter, Klaus Dietmayer, and Felix Heide. In The IEEE Conference on Computer Vision and Pattern Recognition (CVPR), June 2020).

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

**Claims**

1. A computer implemented method for processing a LiDAR point cloud of a scene acquired in the absence of aerosol or with a light level of aerosol, so as to simulate the acquisition of a LiDAR point cloud of this scene in the presence of an aerosol, comprising, for every point of the LIDAR point cloud, the following steps:

   a. determining (DET_R0) the initial range $R_0$ of this point,
   b. determining (DET_I) an initial intensity value associated with this point,
   c. determining (DET_CaP0) the product of the LiDAR system's optical constant and of the LiDAR pulse peak power sent by the LiDAR emitter,
   d. determining (DET_I1) a first intensity value for this point by multiplying the intensity value determined in step b, by a factor depending on an attenuation coefficient and on the initial range determined in step a,
   e. determining (DET_I2(R)) a set of values each associated with a range comprised between 0 and the initial range determined in step a, by calculating an integral over time of a predetermined relationship between the range, the initial range determined in step a, the attenuation coefficient, and the half-power pulse width of the LiDAR emitter,
   f. identifying (ID_I2R) the greatest value of the set of values, and the associated range $R_{tmp}$,
   g. multiplying the value identified in step f by the product determined in step c and a backscattering coefficient, to obtain a second intensity value corresponding to the backscattering produced by the aerosol,
   h. if (I2>I1) the second intensity value identified in step g is greater than the first intensity value determined in step d,

      - determining a random value p of float type comprised within -1 and 1 to calculate a noise factor $n = 2^p$,
      - determining a scaling factor $s = ( R_{tmp} / R_0 )$ using the range identified in steps a and f,
      - replacing the position of the point with a position determined using the noise factor and the scaling factor,
      - replacing the intensity of the point with the second intensity value obtained in step g,

      else, replacing the intensity of the point with the first intensity value determined in step d.

2. The method of claim 1, wherein the values obtained by integrating the predetermined relationship are stored in a lookup table.

3. The method of claim 1 or 2, wherein the integral of step e is the one of the following relationship

$$P_{R,fog}^{soft}(R) = C_A P_0 \beta \int_0^{2\tau_H} sin^2\left(\frac{\pi}{2\tau_H}t\right) \times \frac{\exp\left(-2\alpha\left(R - \frac{ct}{2}\right)\right)}{\left(R - \frac{ct}{2}\right)}$$

$$\times \xi\left(R - \frac{ct}{2}\right) U\left(R_0 - R + \frac{ct}{2}\right) dt$$

wherein $P_{R,fog}^{soft}(R)$ is the received signal power as a function of range R for the contribution of the aerosol,
$C_A$ is the optical constant of the LIDAR system,
$P_0$ is the LiDAR pulse peak power sent by the LiDAR emitter,
$\beta$ is the backscattering coefficient,
$\tau_H$ is the half-power pulse width of the LiDAR emitter,
t is the time,
$\alpha$ is the attenuation coefficient,
c is the speed of light,
$\xi()$ is the crossover function defining the ratio of the area illuminated by the LiDAR emitter and the part of it observed by the receiver,
$U()$ is the Heaviside function, and
$R_0$ is the initial range determined in step a.

4. The method of claim 3, wherein the integral is calculated using an approximation method (e.g. numerical integration).

5. The method of claim 4, wherein Simpson's rule is used as approximation method.

6. The method of any one of claims 1 to 5, wherein step d comprises calculating the first intensity value using the following equation:

$$i_{hard} = i \times \exp(-2\alpha R_0)$$

wherein $i_{hard}$ is the first intensity value,
$i$ is the initial intensity value,
$\alpha$ is the attenuation coefficient, and
$R_0$ is the initial range determined in step a.

7. The method of any one of claims 1 to 6, comprising processing a plurality of LIDAR point clouds each associated with labels, to obtain a processed machine learning training dataset comprising the processed LIDAR point clouds and the corresponding labels.

8. A method of training a machine learning detection model using the training dataset obtained in claim 7 to detect the labels.

9. A system comprising a LiDAR system and, stored on a recording medium readable by a computer, the neural network trained in claim 8.

10. A vehicle comprising a system according to claim 9.

11. A computer program including instructions for executing the steps of a method according to any one of claims 1 to 7 when said program is executed by a computer.

12. A recording medium readable by a computer and having recorded thereon a computer program including instructions for executing the steps of a method according to any one of claims 1 to 7.

**Patentansprüche**

1. Computerimplementiertes Verfahren zur Verarbeitung einer LiDAR-Punktwolke einer Szene, die in der Abwesenheit von Aerosol oder mit einem geringen Maß an Aerosol erfasst wird, um die Erfassung einer LiDAR-Punktwolke dieser Szene in der Gegenwart eines Aerosols zu simulieren, umfassend, für jeden Punkt der LiDAR-Punktwolke, die folgenden Schritte:

   a. Bestimmen (DET_R0) des anfänglichen Bereichs $R_0$ dieses Punktes,
   b. Bestimmen (DET_I) eines anfänglichen Intensitätswertes, der mit diesem Punkt assoziiert ist,
   c. Bestimmen (DET_CaP0) des Produkts der optischen Konstante des LiDAR-Systems und der LiDAR-Impulsspitzenleistung, die durch den LiDAR-Emitter gesendet wird,
   d. Bestimmen (DET_I1) eines ersten Intensitätswertes für diesen Punkt durch Multiplizieren des Intensitätswertes, der in Schritt b bestimmt wird, mit einem Faktor abhängig von einem Dämpfungskoeffizienten und von dem anfänglichen Bereich, der in Schritt a bestimmt wird,
   e. Bestimmen (DET_I2(R)) eines Satzes von Werten, die jeweils mit einem Bereich assoziiert sind, der zwischen 0 und dem anfänglichen Bereich, der in Schritt a bestimmt wird, umfasst ist, durch Berechnen eines Integrals über Zeit einer vorbestimmten Beziehung zwischen dem Bereich, dem anfänglichen Bereich, der in Schritt a bestimmt wird, dem Dämpfungskoeffizienten und der Halbleistungsimpulsbreite des LiDAR-Emitters,
   f. Identifizieren (ID_I2R) des größten Wertes des Satzes von Werten und des assoziierten Bereichs $R_{tmp}$,
   g. Multiplizieren des Wertes, der in Schritt f identifiziert wird, mit dem Produkt, das in Schritt c bestimmt wird, und einem Rückstreukoeffizienten, um einen zweiten Intensitätswert zu erhalten, welcher der Rückstreuung entspricht, die durch das Aerosol produziert wird,
   h. wenn (I2>I1), der zweite Identitätswert, der in Schritt g identifiziert wird, größer als der erste Intensitätswert ist, der in Schritt d bestimmt wird,

      - Bestimmen eines zufälligen Wertes p vom Schwebetyp, der innerhalb von -1 und 1 umfasst ist, um einen Rauschfaktor $n = 2^p$ zu berechnen,
      - Bestimmen eines Skalierungsfaktors $s = (R_{tmp} / R_0)$ unter Verwendung des Bereichs, der in Schritt a und f identifiziert wird,
      - Ersetzen der Position des Punktes durch eine Position, die unter Verwendung des Rauschfaktors und des Skalierungsfaktors bestimmt wird,
      - Ersetzen der Intensität des Punktes durch den zweiten Intensitätswert, der in Schritt g erhalten wird,

      ansonsten Ersetzen der Intensität des Punktes durch den ersten Intensitätswert, der in Schritt d bestimmt wird.

2. Verfahren nach Anspruch 1, wobei die Werte, die erhalten werden, indem die vorbestimmte Beziehung integriert wird, in einer Nachschlagetabelle gespeichert sind.

3. Verfahren nach Anspruch 1 oder 2, wobei das Integral von Schritt e das eine der folgenden Beziehung ist:

$$P_{R,fog}^{soft}(R) = C_A P_0 \beta \int_0^{2\tau_H} sin^2\left(\frac{\pi}{2\tau_H}t\right) \times \frac{\exp\left(-2\alpha\left(R - \frac{ct}{2}\right)\right)}{\left(R - \frac{ct}{2}\right)}$$

$$\times \xi\left(R - \frac{ct}{2}\right) U\left(R_0 - R + \frac{ct}{2}\right) dt$$

wobei $P_{R,fog}^{soft}(R)$ die empfangene Signalleistung in Abhängigkeit des Bereichs $R$ für den Beitrag des Aerosols ist,
$C_A$ die optische Konstante des LIDAR-Systems ist,
$P_0$ die LiDAR-Impulsspitzenleistung ist, die durch den LiDAR-Emitter gesendet wird,
$\beta$ der Rückstreukoeffizient ist,
$\tau_H$ die Halbleistungsimpulsbreite des LiDAR-Emitters ist,
$t$ die Zeit ist,
$\alpha$ der Dämpfungskoeffizient ist,
c die Geschwindigkeit von Licht ist,
$\xi()$ die Crossover-Funktion ist, die das Verhältnis des Bereichs, der durch den LiDAR-Emitter beleuchtet wird, und des Teils davon, der durch den Empfänger beobachtet wird, definiert,

$U()$ die Heaviside-Funktion ist, und

$R_0$ der anfängliche Bereich ist, der in Schritt a bestimmt wird.

4. Verfahren nach Anspruch 3, wobei das Integral unter Verwendung eines Annäherungsverfahrens (z. B. numerische Integration) berechnet wird.

5. Verfahren nach Anspruch 4, wobei die Simpson-Regel als Annäherungsverfahren verwendet wird.

6. Verfahren nach einem der Ansprüche 1 bis 5, wobei Schritt d das Berechnen des ersten Intensitätswertes unter Verwendung der folgenden Gleichung umfasst:

$$i_{hard} = i \times \exp(-2\alpha R_0)$$

wobei $i_{hard}$ der erste Intensitätswert ist,

$i$ der anfängliche Intensitätswert ist,

$\alpha$ der Dämpfungskoeffizient ist, und

$R_0$ der anfängliche Bereich ist, der in Schritt a bestimmt wird.

7. Verfahren nach einem der Ansprüche 1 bis 6, umfassend das Verarbeiten mehrerer LiDAR-Punktwolken, die jeweils mit Etiketten assoziiert sind, um einen verarbeiteten Maschinenlerntrainingsdatensatz zu erhalten, der die verarbeiteten LIDAR-Punktwolken und die entsprechenden Etiketten umfasst.

8. Verfahren zum Trainieren eines Maschinenlerndetektionsmodells unter Verwendung des Trainingsdatensatzes, der in Schritt 7 erhalten wird, um die Etiketten zu detektieren.

9. System, umfassend ein LiDAR-System und, gespeichert in einem Aufzeichnungsmedium, das durch einen Computer lesbar ist, das neuronale Netzwerk, das in Anspruch 8 trainiert wird.

10. Fahrzeug, umfassend ein System nach Anspruch 9.

11. Computerprogramm, das Anweisungen zum Ausführen der Schritte eines Verfahrens nach einem der Ansprüche 1 bis 7 beinhaltet, wenn das Programm durch einen Computer ausgeführt wird.

12. Aufzeichnungsmedium, das durch einen Computer lesbar ist und auf dem ein Computerprogramm aufgezeichnet ist, das Anweisungen zum Ausführen der Schritte eines Verfahrens nach einem der Ansprüche 1 bis 7 beinhaltet.

**Revendications**

1. Procédé mis en œuvre par ordinateur pour traiter un nuage de points LIDAR d'une scène acquise en l'absence d'aérosol ou avec un niveau léger d'aérosol, de façon à simuler l'acquisition d'un nuage de points LIDAR de cette scène en présence d'un aérosol, comprenant, pour tout point du nuage de points LIDAR, les étapes suivantes :

a. détermination (DET_R0) de la distance initiale R0 de ce point,

b. détermination (DET_I) d'une valeur d'intensité initiale associée à ce point,

c. détermination (DET_CaP0) du produit de la constante optique du système LIDAR et de la puissance de crête d'impulsion LIDAR envoyée par l'émetteur LIDAR,

d. détermination (DET_I1) d'une première valeur d'intensité pour ce point en multipliant la valeur d'intensité déterminée à l'étape b, par un facteur dépendant d'un coefficient d'atténuation et de la distance initiale déterminée à l'étape a,

e. détermination (DET_I2(R)) d'un ensemble de valeurs associées chacune à une distance comprise entre 0 et la distance initiale déterminée à l'étape a, en calculant une intégrale dans le temps d'une relation prédéterminée entre la distance, la distance initiale déterminée à l'étape a, le coefficient d'atténuation, et la largeur d'impulsion de demi-puissance de l'émetteur LIDAR,

f. identification (ID_I2R) de la plus grande valeur de l'ensemble de valeurs, et la distance associée R_tmp,

g. multiplication de la valeur identifiée à l'étape f par le produit déterminé à l'étape c et d'un coefficient de rétrodiffusion, pour obtenir une deuxième valeur d'intensité correspondant à la rétrodiffusion produite par l'aérosol,

h. si (I2>I1) la deuxième valeur d'intensité identifiée à l'étape g est plus grande que la première valeur d'intensité déterminée à l'étape d,

- détermination d'une valeur aléatoire p de type flottant comprise entre -1 et 1 pour calculer un facteur de bruit $n = 2^P$,
- détermination d'un facteur de mise à l'échelle $s = (R_{tmp}/R0)$ en utilisant la distance identifiée dans les étapes a et f,
- remplacement de la position du point par une position déterminée en utilisant le facteur de bruit et le facteur de mise à l'échelle,
- remplacement de l'intensité du point par la deuxième valeur d'intensité obtenue à l'étape g,

sinon, remplacement de l'intensité du point par la première valeur d'intensité déterminée à l'étape d.

2. Procédé selon la revendication 1, selon lequel les valeurs obtenues en intégrant la relation prédéterminée sont stockées dans une table de consultation.

3. Procédé selon la revendication 1 ou 2, selon lequel l'intégrale de l'étape e est celle de la relation suivante

$$P_{R,fog}^{soft}(R) = C_A P_0 \beta \int_0^{2\tau_H} sin^2\left(\frac{\pi}{2\tau_H}t\right) \times \frac{\exp\left(-2\alpha\left(R - \frac{ct}{2}\right)\right)}{\left(R - \frac{ct}{2}\right)}$$

$$\times \xi\left(R - \frac{ct}{2}\right) U\left(R_0 - R + \frac{ct}{2}\right) dt$$

où $P_{R,fog}^{soft}(R)$ est la puissance de signal reçu en fonction de la distance R pour la contribution de l'aérosol,
$C_A$ est la constante optique du système LIDAR,
$P_0$ est la puissance de crête d'impulsion LIDAR envoyée par l'émetteur LIDAR,
$\beta$ est le coefficient de rétrodiffusion,
$\tau_H$ est la largeur d'impulsion de demi-puissance de l'émetteur LIDAR,
$t$ est le temps,
$\alpha$ est le coefficient d'atténuation,
$c$ est la vitesse de la lumière,
$\zeta()$ est la fonction de croisement définissant le rapport de la zone illuminée par l'émetteur LIDAR et de la partie de celle-ci observée par le récepteur,
$U()$ est la fonction de Heaviside, et
$R_0$ est la distance initiale déterminée à l'étape a.

4. Procédé selon la revendication 3, selon lequel l'intégrale est calculée en utilisant une méthode d'approximation (par exemple intégration numérique).

5. Procédé selon la revendication 4, selon lequel la règle de Simpson est utilisée comme méthode d'approximation.

6. Procédé selon l'une quelconque des revendications 1 à 5, selon lequel l'étape d comprend le calcul de la valeur d'intensité initiale en utilisant l'équation suivante :

$$i_{hard} = i \times exp(-2\alpha R_0)$$

où $i_{hard}$ est la première valeur d'intensité,
$i$ est la valeur d'intensité initiale,
$\alpha$ est le coefficient d'atténuation, et
$R_0$ est la distance initiale déterminée à l'étape a.

**7.** Procédé selon l'une quelconque des revendications 1 à 6, comprenant un traitement d'une pluralité de nuages de point LIDAR associés chacun à des marqueurs, pour obtenir un ensemble de données d'entraînement en apprentissage automatique traité comprenant les nuages de points LIDAR traités et les marqueurs correspondants.

**8.** Procédé d'entraînement d'un modèle de détection en apprentissage automatique utilisant l'ensemble de données d'entraînement obtenu à la revendication 7 pour détecter les marqueurs.

**9.** Système comprenant un système LIDAR et, stocké sur un support d'enregistrement lisible par un ordinateur, le réseau neuronal entraîné dans la revendication 8.

**10.** Véhicule comprenant un système selon la revendication 9.

**11.** Programme informatique comprenant des instructions pour exécuter les étapes d'un procédé selon l'une quelconque des revendications 1 à 7 quand ledit programme est exécuté par un ordinateur.

**12.** Support d'enregistrement lisible par un ordinateur et ayant enregistré dessus un programme informatique comprenant des instructions pour exécuter les étapes d'un procédé selon l'une quelconque des revendications 1 à 7.

**FIG.1A**

**FIG.1B**

FIG.2

$$(a) \ P^{soft}_{R, \, fog} \ (R) < P^{hard}_{R, \, fog}$$

# FIG.3A

$$(b) \ P^{soft}_{R, \, fog} > P^{hard}_{R, \, fog}$$

# FIG.3B

POINT FROM LiDAR POINT CLOUD

DET_R0

DET_I

DET_CaP0

DET_I1

DET_I2(R)

ID_I2R

MULT

I2 > I1?

NO

YES

REPL_I2

REPL_I1

# FIG.4

**FIG.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARIO BIJELIC ; TOBIAS GRUBER ; FAHIM MANNAN ; FLORIAN KRAUS ; WERNER RITTER ; KLAUS DIETMAYER ; FELIX HEIDE.** Seeing through fog without seeing fog: Deep multimodal sensor fusion in unseen adverse weather. *The IEEE Conference on Computer Vision and Pattern Recognition (CVPR),* June 2020
- Semantic Foggy Scene Understanding with Synthetic Data. **SAKARIDIS CHRISTOS et al.** INTERNATIONAL JOURNAL OF COMPUTER VISION. KLUWER ACADEMIC PUBLISHERS, 23 March 2018, vol. 126, 973-992
- Unmanned ground vehicle simulation with the Virtual Autonomous Navigation Environment. **GOODIN CHRISTOPHER et al.** 2017 INTERNATIONAL CONFERENCE ON MILITARY TECHNOLOGIES (ICMT). IEEE, 31 May 2017, 160-165
- Simulating Photo-realistic Snow and Fog on Existing Images for Enhanced CNN Training and Evaluation. **BERNUTH ALEXANDER VON et al.** 2019 IEEE INTELLIGENT TRANSPORTATION SYSTEMS CONFERENCE (ITSC). IEEE, 27 October 2019, 41-46
- Method and Applications of Lidar Modeling for Virtual Testing of Intelligent Vehicles. **ZHAO JIAN et al.** IEEE TRANSACTIONS ON INTELLIGENT TRANSPORTATION SYSTEMS. IEEE, 10 March 2020, vol. 22, 2990-3000
- **CHRISTOS SAKARIDIS ; DENGXIN DAI ; LUC VAN GOOL.** Semantic foggy scene understanding with synthetic data. *International Journal of Computer Vision,* September 2018, vol. 126 (9), 973-992
- **R. RASSHOFER ; M. SPIES ; H. SPIES.** Influences of weather phenomena on automotive laser radar systems. *Advances in Radio Science,* July 2011, vol. 9
- **SHAOSHUAI SHI ; CHAOXU GUO ; LI JIANG ; ZHE WANG ; JIANPING SHI ; XIAOGANG WANG ; HONGSHENG LI.** Pv-rcnn: Point-voxel feature set abstraction for 3d object detection. *Proceedings of the IEEE/CVF Conference on Computer Vision and Pattern Recognition,* 2020, 10529-10538